# EUROPEAN PATENT SPECIFICATION

(11) **EP 2 348 897 B1**
(45) Date of publication and mention of the grant of the patent: **30.01.2013**
(21) Application number: 09759989.8
(22) Date of filing: 20.10.2009
(51) Int. Cl.: A23N 15/06, B41M 5/26, A23L 1/212

(54) **AN APPARATUS FOR MARKING OLIVES**
VORRICHTUNG ZUR MARKIERUNG VON OLIVEN
APPAREIL POUR MARQUER DES OLIVES

(30) Priority: 21.10.2008 IT BO20080647
(43) Date of publication of application: 03.08.2011
(73) Proprietor: Ralo' S.r.L., 62027 San Severino Marche (MC) (IT)
(72) Inventor: LOMBARDO, Francesco, I-62027 San Severino Marche (Macerata) (IT)
(74) Representative: Dall'Olio, Christian
(86) International application number: PCT/IB2009/007167
(87) International publication number: WO 2010/046752

(56) References cited:
- EP-A2- 1 747 838
- WO-A2-2008/061909
- JP-A- 10 029 721
- US-A- 5 871 080
- US-A1- 2005 226 975
- US-A1- 2008 124 433

## Description

### TECHNICAL FIELD

The invention relates to an apparatus for marking olives.

### BACKGROUND ART

The prior art comprises methods and apparatus for surface-marking of food products with the aim of ensuring traceability of the product for the consumer. These methods and apparatus, which guarantee product traceability, protect the consumer from possible frauds related to the origin of the product, especially where the product is bought retail and not packaged, or collected by the vendor from a recipient and delivered to the customer in the desired quantity in a closable tray (or similar small container).

French patent FR 2, 621, 529 describes a method for heat treatment of a food product, in which the product is subjected to a laser beam with the aim of surface-marking the product. In the method, the single food products (cheeses, sacked meats, etc.) are subjected one by one to a laser beam, of a determined power, which permanently modifies the surface of the product to obtain the desired surface marking.

Document WO2008/061909, in the name of the applicant, describes a method for putting alphanumeric characters and/or logos on food products, in particular olives, which method includes conveying the food product towards a marking station, inscribing without contact - for example by an adequately powerful laser - alphanumerical characters and/or logos on the product and then conveying the product towards a packing station.

The above documents describe a method for marking food products by means of a laser beam apparatus; they do not however describe how to increase productivity of these methods and at the same time optimise marking, i.e. inscribing the alphanumerical characters and/or logos in predetermined zones of the products and in predetermined positions with respect to reference axes thereof.

For example the described marking method in the above-mentioned documents, though applicable to various food products with very different unit costs, do not include use of techniques and product orientation which would enable an increase in the above parameters.

As they are characterised by a low unit cost, olives require a marking method that is capable of high productivity, such as to maintain the marking-stage cost at acceptable levels with regard to the final cost of the olive. Also, considering the size of an olive, the marking has to be done in a place that is easily visible.

### DISCLOSURE OF INVENTION

The aim of the present invention is to provide an apparatus for marking olives which contemporaneously enables the marking to be optimised, i.e. enables marking of the olives in a predetermined surface portion of the olives themselves, and enables the marking stage productivity level to be increased.

A further aim of the present invention is to provide an apparatus for marking olives which resolves the typical drawbacks of known type and set out herein above, and in particular which contemporaneously enables high productivity and marking the olives on the predetermined surface portion.

A still further aim of the invention consists in providing an apparatus the costs of which are relatively contained with respect to the advantages gained.

The above aims are obtained with apparatus for marking olive according to claim 1.

### BRIEF DESCRIPTION OF THE DRAWINGS

The characteristics of the invention are set out in the following, with particular reference to the accompanying tables of drawings, in which:
figure 1 is a schematic lateral view of an apparatus of the present invention;
figure 2 is a section view, along plane II-II, of the apparatus of figure 1;
figure 3 is a plan view of the apparatus of figure 1;
figure 4A is an enlarged plan view of an olive marked in the direction of the greater axis thereof, using the apparatus of figure 1;
figure 4B is an enlarged plan view of an olive marked in a diagonal direction, using the apparatus of figure 1;
figure 5 is a schematic plan view of a further embodiment of the apparatus of the present invention;
figure 6 is an enlarged plan view of an olive marker in the direction of the greater axis thereof using the apparatus of figure 5.

### BEST MODE FOR CARRYING OUT THE INVENTION

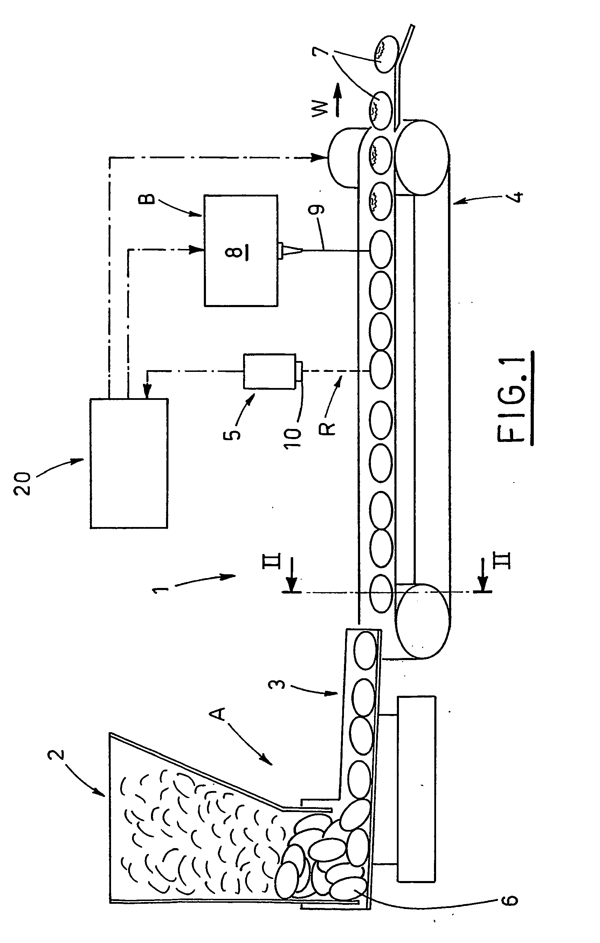

With particular reference to figures 1-3, the numeral 1 denotes in its entirety the apparatus of the present invention.

The apparatus, in a preferred embodiment illustrated in figures 1-3, comprises a feeding station A; conveyor organs 4 destined to receive the olives from the descending channels 3 and to convey said olives towards a marking station B; detecting means 5, provided upstream of the marking station B to detect the passage of every single olive; and marking means 8 located in the marking station B to print alphanumerical characters and/or logos on a predetermined portion of the olive surface without contacting them, in order to obtain marked olives 7.

The feeding station A is constituted by a hopper 2 destined to receive internally thereof a plurality of olives 6, and by a plurality of descending channels 3, connected with the hopper 2 and destined to receive the olives released by the hopper 2.

The conveyor organs 4 are constituted by a plurality of pairs of adjacent conveyor belts 15, 16, associated to respective descending channels 3, operative branches 17, 18 of which face one another to define a V-channel which is symmetrical in a longitudinal plane.

The conveyor organs (4) are activated at a same operating velocity.

The detecting means 5 comprise sensors 10, positioned upstream of the marking station B and able to detect passage of a single olive in a detecting zone R. The sensors 10 are connected to an electronic control panel 20 to which they send an on-off type signal relating to a passage of an olive through the detection zone R.

The marking means 8 are constituted by an apparatus emitting and generating a laser beam. The laser beam 9 of the apparatus 8 is mobile by means of known optical systems in a perpendicular direction X to the advancement direction of the olives, in order to mark the olives at predetermined surface portions thereof.

The marking apparatus 8 is activated in phase relation with the detecting means 5 and with the conveyor organs 4, motors 11 of which are connected to the electronic panel 20.

The functioning of the marking apparatus 8 for olives will be described with reference to a single descending channel 3 and pair of conveyor belts 15, 16 of the preferred embodiment.

A plurality of olives 6, destined to be marked with predetermined alphanumerical characters and/or with a logo is deposited in the hopper 2 of the feeding station A.

The hopper 2 comprises inclined walls 12 for facilitating, via an opening 13, release of olives towards the respective descending channel 3 associated to the opening 13.

After having crossed the respective descending channel 3, which is inclined and provided with lateral containing walls 14 such as to facilitate correct downwards movement, the olives are arranged one behind another on the V-channel defined by the pair of conveyor belts 15, 16 associated to the descending channel 3, such that each olive is located between the facing branches 17, 18 of the conveyor belts 15, 16.

The V-channel defined by the conveyor belts 15, 16 imposes the orientation of the olives such that during transport thereof the greater axis thereof is parallel to the advancement direction W of the conveyor belts 15, 16.

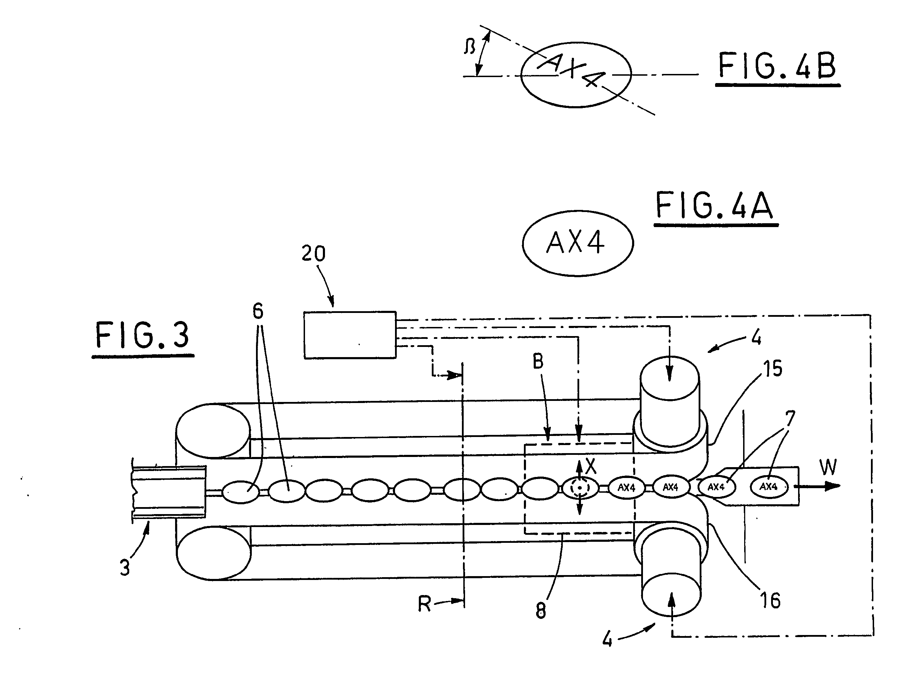

The conveyor belts 15, 16 thus convey the olives one behind another and identically orientated in the direction of the marking station B, as illustrated in figure 3.

At a predetermined detection zone R, situated upstream of the marking station B, the detecting means 5 detect passage of each olive transported by the conveyor belts 4, and send a signal to the electronic control 20.

The electronic control combines the signal with the velocity of the conveyor belts 15, 16 and calculates the exact moment of passage of the olive into the operating zone of the marking apparatus B.

The laser marking apparatus 8 is thus activated by the electronic control 20 in phase relation with the detecting means 5 and the conveyor belts 15, 16, and prints a predetermined set of alphanumerical characters and/or logos on a surface portion of the olive.

The possibility of moving the laser beam 9 by means of known optical systems in direction X perpendicular to the advancement direction W of the olives means that the surface of a plurality of olives can be marked in any direction, as illustrated in figures 4A and 4B. The combination of the conveying motion of the olives W and the displacement of the laser beam 9 enables predetermined characters and/or logos to be etched on the surface of the olives in any inclination ß with respect to the conveying direction W.

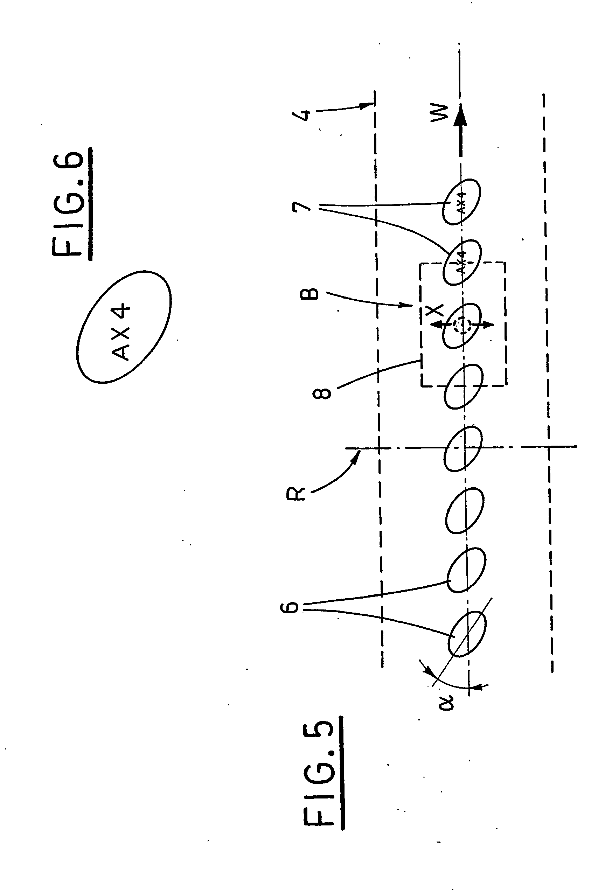

A variant, schematically illustrated in figure 5, further comprises the possibility of orientating the olives on the conveyor organs 4 in an inclination α with respect to the advancement direction W of the conveyor organs 4.

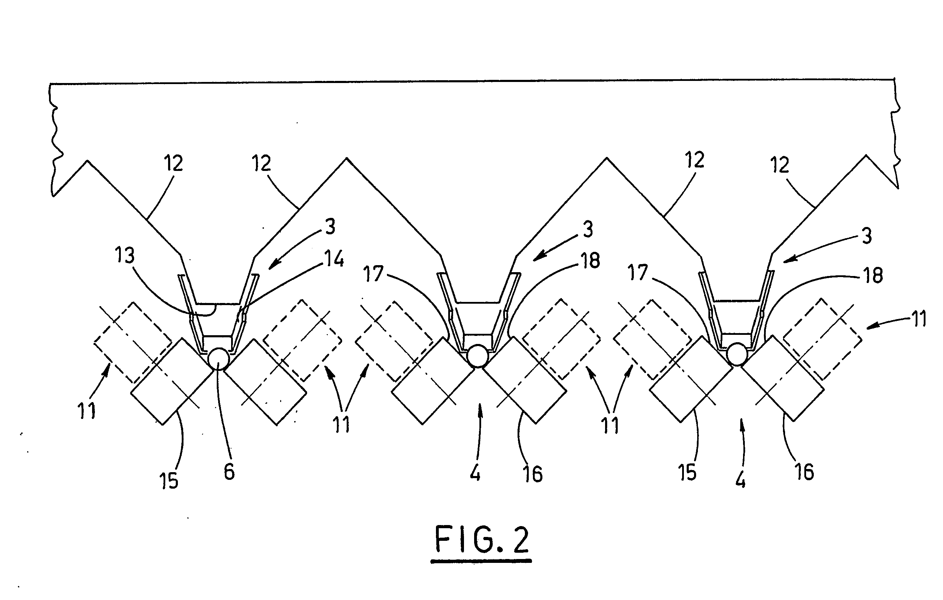

It is obvious that the apparatus 1 can comprise a plurality of descending channels - conveyor organs, as schematically illustrated in figure 2 with reference to the preferred embodiment.

The apparatus 1 advantageously has no need to distance the olives to be marked at a constant step, which guarantees a high level of productivity almost whatever the prevailing supply conditions of the olives; it also advantageously enables marking a plurality of olives at a same surface portion thereof, guaranteeing a high standard of reproducibility of the marking. This is because the olives are brought into the marking station in a same orientation, as illustrated in figures 3 and 5.

The proposed apparatus 1 is extremely versatile, as it enables marking of alphanumerical characters and/or different logos, with different orientations and in different surface positions of the olives with extreme ease and rapidity.

The above description of the functioning of the apparatus 1 sets out in the broadest terms a method for marking olives, which comprises stages of:
conveying olives the one after the other and oriented in a same direction towards a marking station B;
detecting passage, upstream of the marking station B of every single olive using detecting means (5);
printing, by means of a laser beam device (8), in phase relation with the detecting action of the detecting means (5) and with the conveying velocity of the conveyor organs (4), predetermined alphanumerical characters and/or logos on a predetermined portion of the olive surface without contacting the olives, in order to obtain marked olives.

In a preferred embodiment schematically illustrated in figures 1 and 2, in the method the olives are rested on the conveyor organs in an orientation such that a greater axis thereof is parallel to the advancement direction of the conveyor organs 4.

Further, in the method the operating stage of printing predetermined alphanumerical characters and/or logos on a predetermined portion of the surface of the olives is realised by means of a laser beam apparatus 8 in which the laser beam 9 is mobile in a perpendicular direction X to the advancement direction W of the olives, with the use of known optical systems for enabling the surface of a plurality of olives to be marked in any direction, as illustrated in figures 4A and 4B.

In a variant of the method, illustrated in figure 5, the olives are oriented on the conveyor organs 4 with a greater axis of the olives not being parallel to the advancement direction W, with a predetermined inclination α.

In the light of the above, an advantage of the present invention consists in having defined an apparatus for marking the olives which contemporaneously optimises the marking, i.e. it enables marking in a predetermined surface portion thereof, and increases productivity of the marking stage.

The resting of the olives on the conveyor organs, together with the presence of the detecting means, advantageously enables the conveyor organs 4 to work at a higher velocity during the marking stage (and therefore render high productivity levels) with respect to solutions with conveyors having individual seatings, which require more complicated constructional solutions, such as specially-dedicated supply devices.

A further advantage of the present invention consists in having made available an apparatus for marking olives which guarantees high productivity levels and enables the olives to be marked on a same predetermined surface portion.

A further advantage of the present invention consists in having defined an apparatus for marking olives the costs of which are contained with respect to the advantages if provides.

The above is intended as a non-limiting descriptive example, and any possible constructional variants thereof fall within the protective ambit of the present technical solution as claimed herein below.

## Claims

1. An apparatus for marking olives with alphanumerical characters and/or logos, comprising:
conveyor organs (4);
a marking station (B);
laser marking means (8) which are located in the marking station (B) to print alphanumerical characters and/or logos on a predetermined portion of the olive surface without contacting them, in order to obtain marked olives;
**characterized in that**:
it comprises a feeding station (A), constituted by a hopper (2) destined to receive internally thereof a plurality of olives and at least a descending channel (3), which is connected to the hopper (2) and destined to release the olives received from the hopper (2);
the conveyor organs (4): are destined to receive the olives from said descending channels (3) and to convey the olives towards a marking station (B); are configured such as to convey the olives one after another and oriented in a same direction; are made up of at least a couple of adjacent belts (15, 16), operative branches (17, 18) of which are counter-facing in order to define a V-shaped groove which is symmetrical to a longitudinal plane of the organs (4), and **in that** said operative branches (17, 18) receive the olives restingly thereon;
it further comprises detecting means (5) provided upstream of the marking station (B) to detect the passage of each single olive;
the laser marking means (8) are actuated in phase relation with the detecting means (5) and with the conveyor organs (4).

2. The apparatus of claim 1, **characterized in that** said conveyor organs (4) convey the olives such that the greater axis of the olives is parallel to the advancement direction (W) of the conveyor organs (4).

3. The apparatus of claim 1, **characterized in that** it provides a mutual adjustment between the orientation of said olives and the operative working area of the laser beam (9) of said marking means (8).

4. The apparatus of claim 2, **characterized in that** it provides the mutual adjustment of the orientation of the operative area of the laser beam (9) of the marking means (8) with respect to a conveying direction of said olives.

## Patentansprüche

1. Vorrichtung zur Markierung von Oliven mit alphanumerischen Zeichen und/oder Logos, Folgendes beinhaltend:
Förderorgane (4);
eine Markierstation (B);
Laser-Markiereinrichtungen (8), die in der Markierstation (B) angeordnet sind, um alphanumerische Zeichen und/oder Logos berührungslos auf einen vorbestimmten Abschnitt der Olivenoberfläche abzubilden, um markierte Oliven zu erhalten;
**dadurch gekennzeichnet, dass**:
sie eine Zuführstation (A) beinhaltet, bestehend aus einem Vorratstrichter (2), der dazu bestimmt ist, in seinem Inneren mehrere Oliven aufzunehmen, sowie aus zumindest einem absteigenden Kanal (3), der mit dem Vorratstrichter (2) verbunden ist und dazu bestimmt ist, die vom Vorratstrichter (2) empfangenen Oliven auszugeben;
die Förderorgane (4): dazu bestimmt sind, die Oliven von den absteigenden Kanälen (3) zu übernehmen und die Oliven zu einer Markierstation (B) zu befördern; derart konfiguriert sind, dass sie die Oliven eine nach der anderen und in einer gleichen Richtung ausgerichtet befördern; aus zumindest einem Paar nebeneinander angeordneter Bänder (15, 16) bestehen, deren Arbeitstrume (17, 18) einander zugewandt sind, um eine V-förmige Rille zu bilden, die symmetrisch zu einer Längsebene der Organe (4) ist, und dadurch, dass die Arbeitstrume (17, 18) die Oliven aufliegend aufnehmen;
sie ferner Erfassungseinrichtungen (5) beinhaltet, die stromaufwärts vor der Markierstation (B) angeordnet sind, um den Durchlauf jeder einzelnen Olive zu erkennen;
die Laser-Markiereinrichtungen (8) in Phasenbeziehung zu den Erfassungseinrichtungen (5) und den Förderorganen (4) betätigt werden.

2. Vorrichtung nach Anspruch 1, **dadurch gekennzeichnet, dass** die Förderorgane (4) die Oliven derart befördern, dass die längere Achse der Oliven parallel zu der Vorschubrichtung (W) der Förderorgane (4) verläuft.

3. Vorrichtung nach Anspruch 1, **dadurch gekennzeichnet, dass** sie eine aufeinander abgestimmte Einstellung zwischen der Ausrichtung der Oliven und des Arbeitsbereichs des Laserstrahls (9) der Markiereinrichtungen (8) vorsieht.

4. Vorrichtung nach Anspruch 2, **dadurch gekennzeichnet, dass** sie eine aufeinander abgestimmte Einstellung der Ausrichtung des Arbeitsbereichs des Laserstrahls (9) der Markiereinrichtungen (8) in Bezug auf die Förderrichtung der Oliven vorsieht.

## Revendications

1. Un appareil pour marquer des olives avec des caractères alphanumériques et/ou logos, comprenant :
des organes transporteurs (4) ;
une station de marquage (B) ;
des moyens de marquage au laser (8) qui sont situés dans la station de marquage (B) pour imprimer des caractères alphanumériques et/ou logos sur une portion prédéfinie de la surface des olives sans toucher ces dernières, de manière à obtenir des olives marquées ;
**caractérisé en ce que** :
il comprend une station d'alimentation (A), consistant en une trémie (2) destinée à recevoir intérieurement une pluralité d'olives et au moins un canal de descente (3), qui est relié à la trémie (2) et est destiné à relâcher les olives reçues de la trémie (2) ;
les organes transporteurs (4) : ils sont destinés à recevoir les olives desdits canaux de descente (3) et à transporter les olives vers une station de marquage (B) ; ils sont configurés de manière à transporter les olives l'une après l'autre et orientées dans une même direction ; ils sont constitués par au moins une paire de courroies adjacentes (15, 16), dont des branches opérationnelles (17, 18) se font face de manière à définir une gorge en forme de « V » qui est symétrique par rapport à un plan longitudinal des organes (4), et **en ce que** lesdites branches opérationnelles (17, 18) reçoivent les olives en appui ;
il comprend en outre des moyens de détection (5), situés en amont de la station de marquage (B), pour détecter le passage de chacune des olives ;
les moyens de marquage au laser (8) sont activés en relation de phase avec lesdits moyens de détection (5) et avec lesdits organes transporteurs (4).

2. L'appareil selon la revendication 1, **caractérisé en ce que** lesdits organes transporteurs (4) transportent les olives de manière à ce que l'axe le plus grand des olives soit parallèle à la direction d'avance (W) des organes transporteurs (4).

3. L'appareil selon la revendication 1, **caractérisé en ce qu'**il prévoit un réglage mutuel entre l'orientation desdites olives et la zone opérationnelle de travail du faisceau laser (9) desdits moyens de marquage (8).

4. L'appareil selon la revendication 2, **caractérisé en ce qu'**il prévoit le réglage mutuel de l'orientation de la zone opérationnelle du faisceau laser (9) des moyens de marquage (8) par rapport à une direction de transport desdites olives.
